**Europäisches Patentamt**

**European Patent Office**

**Office européen des brevets**

(19)

(11) Veröffentlichungsnummer: **0 102 590**
**B1**

# EUROPÄISCHE PATENTSCHRIFT

(12)

(45) Veröffentlichungstag der Patentschrift:
**10.12.86**

(21) Anmeldenummer: **83108355.5**

(22) Anmeldetag: **24.08.83**

(51) Int. Cl.⁴: **C 04 B 35/48, C 04 B 35/00,**
**C 04 B 35/58, F 02 F 7/00**

(54) **Keramikformkörper, Verfahren zu seiner Herstellung und seine Verwendung.**

(30) Priorität: **06.09.82 DE 3233019**

(43) Veröffentlichungstag der Anmeldung:
**14.03.84 Patentblatt 84/11**

(45) Bekanntmachung des Hinweises auf die Patenterteilung:
**10.12.86 Patentblatt 86/50**

(84) Benannte Vertragsstaaten:
**AT BE CH DE FR GB IT LI LU NL SE**

(56) Entgegenhaltungen:
**EP - A - 0 043 456**
**DE - A - 2 717 010**
**DE - A - 2 751 938**
**DE - B - 2 549 652**

**VERRES ET REFRACTAIRES, Band 35, Nr. 6, November-Dezember 1981, Paris, Frankreich; "La zircone : renforcement d'une céramique par transformation d'une seconde phase particulaire", Seite 1042**

(73) Patentinhaber: **Max-Planck-Gesellschaft zur Förderung der Wissenschaften e.v., Bunsenstrasse 10, D-3400 Göttingen (DE)**

(72) Erfinder: **Claussen, Nils, Forschenweg 24, D-7250 Leonberg 7 (DE)**
Erfinder: **Petzow, Günter, Tannenweg 7, D-7022 Leinfelden-Echterdingen (DE)**

(74) Vertreter: **Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820, D-8000 München 86 (DE)**

## Beschreibung

Gegenstand der Erfindung ist ein Keramikformkörper mit hohem Rissauffangvermögen und damit hoher Bruchzähigkeit aus einer keramischen Matrix und mindestens einer darin dispergierten Phase aus keramischem Einlagerungsmaterial.

Aus der DE-AS 2 549 652 ist bereits ein Keramikformkörper hoher Bruchzähigkeit bekannt, der von feinsten Mikrorissen in hoher Dichte durchsetzt ist und aus einer keramischen Matrix und mindestens einer darin dispergierten Phase aus keramischem Einlagerungsmaterial besteht, wobei das keramische Einlagerungsmaterial bei der Brenntemperatur des Keramikformkörpers und bei Raumtemperatur in verschiedenen enantiotropen festen Modifikationen vorliegt. Aufgrund dieser Eigenschaften besitzt er eine verbesserte Temperaturwechselbeständigkeit und Schlagzähigkeit bei im wesentlichen gleich guter mechanischer Festigkeit wie die bekannten Keramiken.

Die DE-OS 2 717 010 befasst sich ebenfalls mit einem von feinsten Mikrorissen in hoher Dichte durchsetzten Keramikformkörper hoher Bruchzähigkeit, der eine weitere Ausbildung des Gegenstandes der DE-AS 2 549 652 darstellt, die darin zu sehen ist, dass die keramische Matrix eine zusätzlich eingelagerte Phase enthält, die ihrerseits aus einer keramischen Matrix und mindestens einer darin dispergierten Phase aus keramischem Einlagerungsmaterial besteht, welches einen vom Gehalt des Grundmaterials verschiedenen Gehalt an keramischem Einlagerungsmaterial besitzt. Diese Keramikformkörper werden dadurch hergestellt, dass man kugelförmige Agglomerate mit einem bestimmten Gehalt an keramischem Einlagerungsmaterial herstellt, diese Agglomerate mit einem gleichartigen Material mit einem anderen Gehalt an keramischem Einlagerungsmaterial beschichtet und anschliessend die beschichteten Agglomerate verpresst und sintert oder heisspresst.

Beiden vorbekannten Keramikformkörpern ist eigen, dass die Grundmatrix monokline $ZrO_2$-Teilchen enthält und Mikrorisse in hoher Dichte aufweist.

Es besteht nun nach wie vor ein Bedürfnis dafür, keramische Konstruktionswerkstoffe zu schaffen, die bei hoher Bruchfestigkeit ein gutes Rissauffangvermögen und gleichzeitig eine geringe Wärmeleitfähigkeit besitzen. Dabei kann die Phasenumwandlung feindisperser $ZrO_2$-Teilchen von der tetragonalen in die monokline Gittermodifikation in unterschiedlicher Weise zur Verbesserung des Verhaltens keramischer Werkstoffe ausgenutzt werden. Beispielsweise bewirkt eine im Spannungsfeld induzierte Umwandlung sehr kleiner (tetragonaler) Teilchen einen sehr hohen Widerstand gegen Rissausbreitung, d.h. eine grosse mechanische Festigkeit, während grössere Teilchen auf der anderen Seite bei ihrer spontanen Umwandlung Mikrorisse auslösen, die die Wärmeisolierfähigkeit drastisch erhöhen, ohne jedoch die Festigkeit allzusehr zu beeinträchtigen. Beide Eigenschaften sind für den Einsatz von Keramikformkörpern in Wärmekraftmaschinen von massgebender Bedeutung.

Die Aufgabe der vorliegenden Erfindung besteht nun darin, die herkömmlichen Keramikformkörper in der Weise zu verbessern, dass sie bei gesteigerter Festigkeit ein erhöhtes Rissauffangvermögen und eine erhöhte Wärmedämmung ermöglichen.

Es hat sich nunmehr gezeigt, dass diese Aufgabe erfindungsgemäss dadurch gelöst werden kann, dass man in eine dichte, mikrorissfreie Grundmatrix Druckzonen einlagert, die aus einer Mischung eines Grundmatrixmaterials mit unstabilisierten, bei Raumtemperatur überwiegend monoklinen $ZrO_2$-Teilchen bestehen.

Gegenstand der Erfindung ist daher ein Keramikformkörper aus einer keramischen Matrix und mindestens einer darin dispergierten Phase aus keramischem Einlagerungsmaterial, der gekennzeichnet ist durch eine dichte, mikrorissfreie keramische Grundmatrix und darin eingelagerten Druckzonen aus einem Druckzonenmaterial, das aus einer Mischung eines Grundmatrixmaterials mit unstabilisierten, bei Raumtemperatur überwiegend monoklinen $ZrO_2$-Teilchen besteht.

Die Grundmatrix und das Grundmatrixmaterial der eingelagerten Druckzonen können aus dem gleichen Stoff oder verschiedenen Stoffen oder Stoffgemischen bestehen. Bevorzugt wird gleiche stoffliche Zusammensetzung.

Gemäss einer bevorzugten Ausführungsform der Erfindung ist das Druckzonenmaterial in Form von kugelförmigen Druckzonen mit einem Durchmesser im Bereich von 10 bis 100 µm in die Grundmatrix eingebettet.

Gemäss einer weiteren vorteilhaften Ausführungsform der Erfindung enthält die Grundmatrix eingelagerte $ZrO_2$-Teilchen, die im Gegensatz zu den vorbekannten Keramikformkörpern der oben angesprochenen Druckschriften bei Raumtemperatur in der tetragonalen (statt bisher der monoklinen) Gittermodifikation vorliegen, wobei die Teilchengrösse bzw. die Korngrösse dieser $ZrO_2$-Teilchen in der Grundmatrix mit Vorteil weniger als 1 µm beträgt.

Erfindungsgemäss wird die tetragonale Form der $ZrO_2$-Teilchen in der Grundmatrix durch längeres Attritieren (mehr als 2 Stunden bis 12 Stunden) oder durch geringe Stabilisatorzusätze von $Y_2O_3$ erzielt, wobei im ersteren Fall die geringere Teilchengrösse (0,1 bis 0,5 µm) die Ursache für die Erhaltung der tetragonalen Form ist, während im zweiten Fall die $Y_2O_3$-Teilstabilisierung hierfür verantwortlich ist, so dass in diesem letzteren Fall weniger effektive Mahl- und Mischverfahren eingesetzt werden können.

Die monokline Gittermodifikation der in den Druckzonen des erfindungsgemässen Keramikformkörpers enthaltenen $ZrO_2$-Teilchen wird dadurch erzielt, dass das Druckzonenmaterial aus einer Pulvermischung gebildet wird, die entweder kurzzeitig (10 bis 30 Minuten) attritiert oder in einer Kugelmühle gebildet worden ist, so dass sich eine grössere Teilchengrösse der $ZrO_2$-Teilchen ergibt, die damit bei Raumtemperatur in der monoklinen Form vorliegen.

Der erfindungsgemässe Keramikformkörper enthält vorzugsweise als Grundmatrixmaterial $Al_2O_3$, Mullit, Spinell, $Si_3N_4$, $Y_2O_3$ und/oder mit MgO und/oder $Y_2O_3$ teilstabilisiertes $ZrO_2$.

Erfindungsgemäss ist es von besonderem Vorteil, wenn die Grundmatrix 1 bis 25 Vol.% $ZrO_2$-Teilchen enthält, die noch bevorzugter mit bis zu 2 Mol-% $Y_2O_3$ teilstabilisiert sind.

Vorzugsweise beträgt der Anteil der Druckzonen in der Grundmatrix 5 bis 30 Vol.%, wobei die Druckzonen in besonders bevorzugter Weise 5 bis 50 Vol.% unstabilisierte $ZrO_2$-Teilchen enthalten.

Eine besonders bevorzugte Ausführungsform der Erfindung umfasst einen Keramikformkörper der oben beschriebenen Art, der eine durch spannungsinduzierte Umwandlung der tetragonalen $ZrO_2$-Teilchen erzeugte Oberflächendruckspannung aufweist und dadurch eine erheblich gesteigerte Festigkeit besitzt. Diese spannungsinduzierte Umwandlung kann durch Überschleifen der Oberfläche des Keramikformkörpers bewirkt werden. Bei den herkömmlichen Keramikformkörpern des oben angesprochenen Standes der Technik ist dies nicht möglich, da die dort enthaltenen $ZrO_2$-Teilchen nur in der monoklinen Gittermodifikation vorliegen. Insoweit ergibt sich eine erhebliche Bereicherung der Technik durch die vorliegende Erfindung.

Der erfindungsgemässe Keramikformkörper weist somit ein Duplex-Gefüge auf, welches gleichmässig verteilte Druckzonen umfasst, die dadurch gebildet werden, dass man kugelige Agglomerate eines Druckzonenmaterials mit dem Pulver des Grundmatrixmaterials vermischt. Da in der bevorzugten Ausführungsform sowohl die Grundmatrix als auch die Druckzonen aus einer Dispersions-Keramik bestehen, beispielsweise aus $Al_2O_3$ + $ZrO_2$-Teilchen, handelt es sich bei der «Phasengrenzfläche» nur um eine Spannungszonengrenze, d.h. die Grundmatrix ($Al_2O_3$) ist durchgehend und es unterscheiden sich nur die eingelagerten $ZrO_2$-Teilchen durch Grösse, Volumenanteil, Gittermodifikation und damit ihrem Ausdehnungsverhalten. In dieser Weise gelingt es, sowohl die Wärmeleitfähigkeit zu verringern als auch den Bruchwiderstand zu steigern, so dass es möglich wird, diese Keramikformkörper aufgrund ihrer guten Hochtemperatureigenschaften, ihrer ausgezeichneten Wärmeisolation sowie ihres guten Reibungsverhaltens für Wärmekraftmaschinen zu verwenden. Gegenstand der Erfindung ist daher auch die Verwendung der erfindungsgemässen Keramikformkörper für diesen Einsatzzweck, namentlich im heissen Bereich von Wärmekraftmaschinen.

Gegenstand der Erfindung ist weiterhin ein Verfahren zur Herstellung der oben definierten Keramikformkörper, welches dadurch gekennzeichnet ist, dass man das Grundmatrixmaterial mit Agglomeraten des Druckzonenmaterials trocken mischt, die Mischung nach an sich bekannten pulvermetallurgischen Verfahren zu Formkörpern verpresst und diese entweder drucklos sintert oder sintert und heissisostatisch nachpresst. Vorzugsweise setzt man dabei ein agglomeriertes Grundmatrixmaterial ein, das aus den entsprechenden pulverförmigen Bestandteilen durch Sprühtrocknen, Gefriertrocknen oder Behandeln im Taumelmischer gebildet worden ist und dessen $ZrO_2$-Teilchen eine durch längeres Attritieren oder durch geringe Stabilisatorzusätze von $Y_2O_3$ gebildete tetragonale Form aufweisen. Dabei ist es erfindungsgemäss von Vorteil, die eingelagerten Druckzonen aus Mischungen trocken zu agglomerieren oder sprühzutrocknen, die entweder kurzzeitig (10 bis 30 Minuten) attritiert oder in einer Kugelmühle hergestellt wurden, so dass die darin enthaltenen $ZrO_2$-Teilchen bei Raumtemperatur in der monoklinen Form vorliegen. Bei der oben beschriebenen Verfahrensweise erhält man einen Keramikformkörper, dessen Grundmatrix keine Mikrorisse aufweist und tetragonale $ZrO_2$-Teilchen enthält, wobei der Volumenanteil der $ZrO_2$-Teilchen in der Grundmatrix und in den Druckzonen gleich gross oder auch unterschiedlich sein kann.

Gemäss einer bevorzugten Ausführungsform der erfindungsgemässen Verfahrensweise wird die Oberfläche des gesinterten Keramikformkörpers geschliffen, was zur Folge hat, dass die tetragonalen Teilchen einer spannungsinduzierten Umwandlung unterliegen, wodurch Oberflächendruckspannungen erzeugt werden, die zu einer erheblichen Steigerung der Festigkeit des Materials führen.

Der erfindungsgemässe Keramikformkörper zeichnet sich gegenüber den vorbekannten Formkörpern des oben angesprochenen Standes der Technik dadurch aus, dass er ebenso eine hohe Bruchzähigkeit und Festigkeit aufweist, aber im Gegensatz zu den vorbekannten Materialien gleichzeitig ein hohes Rissauffangvermögen (Brucharbeit) und eine gute Thermoschockbeständigkeit aufweist. Dabei liegen die $ZrO_2$-Teilchen bei dem erfindungsgemässen Keramikformkörper bei der Brenn- und bei der Raumtemperatur in der Grundmatrix in derselben «enantiotropen» festen Modifikation, nämlich der tetragonalen Gittermodifikation vor, während in den Druckzonen jeweils verschiedene Modifikationen vorherrschen, nämlich bei der Brenntemperatur die tetragonale Form und bei Raumtemperatur die monokline Form.

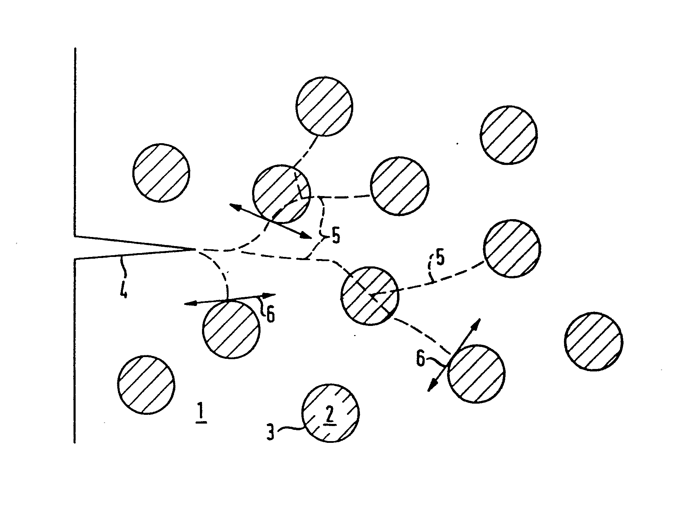

Die Erfindung sei im folgenden näher unter Bezugnahme auf die beigefügte Zeichnung erläutert. Die einzige Figur der Zeichnung vermittelt eine schematische Darstellung des Aufbau- und Wirkungsprinzips des erfindungsgemässen Keramikformkörpers.

So sind in dem Grundmatrixmaterial 1, das aus einer $ZrO_2$-haltigen Dispersionskeramik besteht, sphärische Druckzonen 2 aus einer ähnlichen Dispersionskeramik eingelagert, wobei sich die $ZrO_2$-Teilchen in der Grundmatrix bzw. den Druckzonen durch Teilchengrösse und/oder den Stabilisatoranteil und/oder den Volumenanteil unterscheiden. Damit handelt es sich bei der Grenzfläche 3 nicht um eine echte Phasengrenze, sondern um eine Spannungszonengrenze. Im Prinzip kann sich aber das Material der Grundmatrix und das der Druckzonen auch unterscheiden, die Grenzflächen sind jedoch als grosse, festigkeitsmindernde Gefügefehler zu betrachten. Ein Riss 4 (beispielsweise ein Oberflächenfehler oder ein innerer Gefügefehler) wird sich beim Überschreiten der kritischen, für das Grundmatrixmaterial typischen Spannungskonzentration ($K_{lc}$) an seiner Spitze ausbreiten und ergibt die Rissverlängerungen 5. Diese Rissverlängerungen 5 können nicht senkrecht zur Hauptspannungsrichtung verlaufen, sondern werden auf die Druckzonen 2 hingelenkt, da diese innerhalb der Grundmatrix von tangentialen Zugspannungen 6 umgeben sind. Die Abschnitte der Hauptrissfront werden daher zunächst in den Druckzonen aufgehalten, bis nach zusätzlicher äusserer Lasterhöhung – was einem grösseren effektiven Bruchwiderstand entspricht – eine weitere Rissverlängerung stattfinden kann. Die wiederholte Rissablenkung in Richtung auf die Druckzonen 2 zu hat eine Rissverzweigung zur Folge, die ein R-Kurvenverhalten bewirkt, d.h. das Rissauffangvermögen wird mit zunehmender Rissverlängerung grösser, ein Effekt, der insbesondere das Thermoschockverhalten des erfindungsgemässen Keramikformkörpers günstig beeinflusst.

Dieses erfindungsgemässe Konzept des Duplex-Gefügeaufbaus ermöglicht über die Druckzonen ein höheres Rissauffangvermögen und damit ein günstigeres Bruchverhalten des Keramikformkörpers.

Die folgenden Beispiele dienen der weiteren Erläuterung der Erfindung.

### Beispiel 1

Man bereitet ein Grundmatrixmaterial in Form einer pulverförmigen Mischung aus 85 Vol.% $Al_2O_3$ mit einer mittleren Ausgangsteilchengrösse von 0,5 μm und 15 Vol.% $ZrO_2$ mit einer mittleren Ausgangsteilchengrösse von 0,3 μm und attritiert das Material in Wasser während 10 Stunden. Dann bildet man durch Sprühtrocknen Agglomerate des Grundmatrixmaterials mit Durchmessern zwischen 5 und 40 μm.

Als Druckzonenmaterial verwendet man eine pulverförmige Mischung aus 80 Vol.% $Al_2O_3$ mit einer mittleren Ausgangsteilchengrösse von 0,5 μm und 20 Vol.% $ZrO_2$ mit einer mitleren Ausgangsteilchengrösse von 3 μm und attritiert die Mischung während 10 Minuten, so dass man ein pulverförmiges Material erhält, welches $ZrO_2$-Teilchen mit einer Teilchengrösse von 1 bis 3 μm enthält. Diese Pulvermischung wird dann im Taumelmischer trocken zu Agglomeraten mit Durchmessern im Bereich von 60 bis 100 μm verformt.

Anschliessend vermischt man 200 g der sprühgetrockneten Agglomerate des Grundmatrixmaterials mit 40 g der Agglomerate des Druckzonenmaterials in einem Schaufelmischer während 1 Stunde. Man verpresst die Agglomeratmischung isostatisch bei 600 MPa und sintert während 2 Stunden bei 1530°C an der Luft.

Die Vierpunkt-Biegebruchfestigkeit überschliffener Proben beträgt 430 MPa (Grundmatrixmaterial allein: 520 MPa) und das Material besitzt eine kritische Spannungskonzentration $K_{lc}$ (ISB) von 7,4 MPa $\sqrt{m}$ (4,9 MPa $\sqrt{m}$), während die kritische Temperaturdifferenz ($\Delta T_c$) bei Abschreckung im kalten Wasser 350°C (220°C) beträgt. (Die in Klammern angegebenen Werte stehen für Proben, die nur aus dem Grundmatrixmaterial allein hergestellt worden sind.)

Eine Abschreckung in kochendem Wasser von 100°C ergibt bei einer Abschrecktemperatur (bis 800°C) einen Festigkeitsverlust ($\Delta T_c$ 100 >800°C), während die Proben aus dem Grundmatrixmaterial allein eine $\Delta T_c$ 100 von etwa 340°C aufwiesen.

Die mittlere Korngrösse der $Al_2O_3$-Matrix der Prüfkörper betrug 1 bis 2 μm und die $ZrO_2$-Teilchengrösse in der Grundmatrix 0,1 bis 0,5 μm und in den Druckzonen zwischen 1 und 3 μm (ermittelt mit dem Transmissionselektronenmikroskop).

### Beispiel 2

Man verfährt nach der Arbeitsweise von Beispiel 1, mit dem Unterschied, dass die Probekörper während 2 Stunden bei 1450°C gesintert und anschliessend während 10 Minuten bei 1600°C ohne Einkapselung in Argon bei einem Druck von 150 MPa heissisostatisch gepresst werden.

Man erhält Keramikformkörper mit einer Biegebruchfestigkeit von 530 MPa, einer kritischen Spannungskonzentration $K_{lc}$ (ISB) von 7,5 MPa $\sqrt{m}$ und einer kritischen Temperaturdifferenz in 20° kaltem Wasser von $\Delta T_c^{20} \approx 370°C$.

### Beispiel 3

Nach der Verfahrensweise von Beispiel 1 werden 200 g des agglomerierten Grundmatrixmaterials mit 50 g des Druckzonenmaterials vermischt, zu Prüfkörpern verpresst und gesintert. Dabei wurde das agglomerierte Grundmatrixmaterial durch Sprühtrocknen einer wässrigen Mischung aus 75 Vol.% $Al_2O_3$ (wie in Beispiel 1) und mit Zirkonium- und Yttriumacetat entsprechend 25 Vol.% [$ZrO_2$+1 Mol-% $Y_2O_3$] und anschliessendes Calcinieren bei 600°C an der Luft hergestellt, während das agglomerierte Druckzonenmaterial nach der Verfahrensweise von Beispiel 1 bereitet wurde.

Die Festigkeit der überschliffenen Keramikformkörperproben betrug 580 MPa. Die kritische Spannungskonzentration $K_{lc}$ (ISB) betrug 6,8 MPa$\sqrt{m}$ und $\Delta T_c^{20}$ betrug 330°C.

### Beispiel 4

Man vermischt 200 g agglomeriertes Grundmatrixmaterial mit 60 g agglomeriertem Druckzonenmaterial nach der Verfahrensweise von Beispiel 1 und sintert während 4 Stunden bei 1500°C.

Das verwendete Grundmatrixmaterial ist identisch mit dem von Beispiel 3, während das Druckzonenmaterial durch Sprühtrocknen einer wässrigen Mischung aus 50 Vol.% $Al_2O_3$ (wie in Bei-

spiel 1) und 50 Vol.% $ZrO_2$ (wie in Beispiel 1) hergestellt wurde. Die Teilchendurchmesser lagen zwischen 10 und 40 µm.

Die Festigkeit der erhaltenen Keramikformkörper betrug 440 MPa, die kritische Spannungskonzentration $K_{Ic}$ (ISB) 8,2 MPa $\sqrt{m}$ und $T_c^{20} \approx 350$ bis 500°C (kein scharfer Abfall der Festigkeit mehr erkennbar). Die Wärmeleitfähigkeit des Materials bei Raumtemperatur betrug 5 W/mK.

### Beispiel 5

Man vermischt 150 g im Taumelmischer hergestelltes agglomeriertes Grundmatrixmaterial aus Mullit ($Al_2O_3$/$SiO_2$-Gewichtsverhältnis 75/25, Teilchengrösse etwa 0,3 µm) mit 30 g agglomeriertem Druckzonenmaterial (Mischung aus $ZrSiO_4$+$Al_2O_3$) nach der Verfahrensweise von Beispiel 1 und verpresst das Material. Die Durchmesser der Agglomeratteilchen lagen im Bereich von 60 bis 100 µm.

Die Formkörper wurden zunächst während 2 Stunden bei 1450°C und anschliessend während 2 Stunden bei 1600°C und er Luft gesintert. Die Festigkeit der erhaltenen Keramikformkörper betrug 220 MPa, die kritische Spannungskonzentration $K_{Ic}$ (ISB) 5,3 MPa $\sqrt{m}$ und $\Delta T_c^{20}$ 310°C im Vergleich zu 180°C für Formkörper aus reinem Mullit.

### Beispiel 6

Man vermischt 150 g sprühgetrocknetes Grundmaterial aus $Al_2O_3$-reichem, vorreagiertem Spinellpulver (54 Mol-% $Al_2O_3$ und 46 Mol-% MgO) mit 30 g Druckzonenmaterial aus derselben Spinellzusammensetzung und 25 Vol.% $ZrO_2$, wie in Beispiel 1. Die Mischung wird in Graphitmatrizen (Durchmesser 35 mm) bei 1650°C 1 Std. heissgepresst und anschliessend 12 Std. bei 900°C an Luft ausgelagert.

Die Festigkeit betrug 500 MPa, $K_{Ic}$ (ISB) = 5,5 MPa $\sqrt{m}$ und $\Delta T_c^{20} \approx 270$°C gegenüber $\Delta T_c$ 150°C für reines Spinell.

### Beispiel 7

200 g Grundmatrixmaterial aus $ZrO_2$ mit 2 Mol-% $Y_2O_3$, das 4 Std. mit $Al_2O_3$-Mahlkugeln (1–3 mm) in Alkohol attritiert wurde, wird mit 50 g Druckzonenmaterial wie in Beispiel 4 vermischt, isostatisch verpresst und 4 Std. bei 1480°C an Luft gesintert.

Die Grundmatrix bestand nach dem Sinterprozess zu >95% aus tetragonalem $ZrO_2$ mit einer Korngrösse <1 µm. Die Druckzonen waren zu >90% monoklin. Die Festigkeit betrug 730 MPa und $K_{Ic}$ (ISB) = 7,3 MPa $\sqrt{m}$.

### Beispiel 8

Es wurden 150 g des agglomerierten Grundmatrixmaterials mit 20 g des agglomerierten Druckzonenmaterials nach der Verfahrensweise von Beispiel 1 vermischt und nach der Methode von Beispiel 6 bei 1750°C heissgepresst.

Dabei wurde das Grundmatrixmaterial aus einer Mischung von $Si_3N_4$ mit 20 Gew.% $Al_2O_3$ und 10 Gew.% $Y_2O_3$ im Taumelmischer hergestellt.

Das Druckzonenmaterial wurde in gleicher Weise gebildet, enthielt jedoch zusätzlich 30 Vol.% $ZrO_2$.

Die Festigkeit der erhaltenen Keramikformkörper betrug 760 MPa, die kritische Spannungskonzentration $K_{Ic}$ (ISB) 7,3 MPa $\sqrt{m}$ und $\Delta T_c$ >600°C.

### Beispiel 9

150 g des Grundmatrixmaterials aus Beispiel 1 ($Al_2O_3$+15 Vol.% $ZrO_2$) werden mit 50 g des Druckzonenmaterials nach der Verfahrensweise von Beispiel 1, jedoch 24 Stunden in einem Taumelmischer (Typ turbula) statt 1 Stunde in einem Schaufelmischer vermischt, isostatisch bei 600 MPa gepresst und 2 Stunden bei 1450°C gesintert. Anschliessend werden die Sinterkörper 2 Minuten bei 1600°C und 200 MPa heissisostatisch nachverdichtet.

Das Druckzonenmaterial besteht wie im Beispiel 8 aus 70 Vol.% ($Si_3N_4$+20 Gew.% $Al_2O_3$ und 10 Gew.% $Y_2O_3$)+30 Vol.% $ZrO_2$, das jedoch 6 Stunden in Wasser attritiert und anschliessend zu 5 bis 40 µm grossen kugeligen Agglomeraten sprühgetrocknet wurde.

Der $K_{Ic}$-Wert betrug 7,5 MPa $\sqrt{m}$ (4,9 MPa $\sqrt{m}$) und die kritische Temperaturdifferenz $\Delta T_c^{20} \approx 370$°C (220°C).

### Beispiel 10

200 g des Grundmatrixmaterials aus Beispiel 1 wird mit 50 g des Druckzonenmaterials nach der Verfahrensweise von Beispiel 9 (24 Stunden in einem Taumelmischer statt 1 Stunde in einem Schaufelmischer) vermischt und wie im Beispiel 8 verdichtet.

Das Druckzonenmaterial besteht aus Schmelzmullit (Dynamullit, Dynamit – Nobel AG), der 6 Stunden mit 20 Vol.% $ZrO_2$ (wie in Beispiel 1) in Wasser attritiert und zu 5 bis 40 µm grossen kugeligen Agglomeraten sprühgetrocknet wurde.

Der $K_{Ic}$-Wert betrug 7,1 MPa $\sqrt{m}$ (4,9 MPa $\sqrt{m}$) und $\Delta T_c^{20} \approx 340$°C (220°C).

### Beispiel 11

200 g des Grundmatrixmaterials aus Beispiel 7, jedoch 4 Stunden in Wasser attritiert und sprühgetrocknet, wird mit 50 g des Druckzonenmaterials nach der Verfahrensweise von Beispiel 9 vermischt und verdichtet.

Das Druckzonenmaterial besteht aus $Al_2O_3$-reichem Spinell (MgO×3,5 $Al_2O_3$, Fa. Hrand Djevahirdjian, Schweiz) der 6 Stunden mit 30 Vol.% $ZrO_2$ (wie im Beispiel 1) in Wasser attritiert und zu 5 bis 40 µm grossen kugeligen Agglomeraten sprühgetrocknet wurde.

Der $K_{Ic}$-Wert betrug 6,8 MPa $\sqrt{m}$ (9,5 MPa $\sqrt{m}$) und $\Delta T_c \approx 420$°C (180°C).

### Patentansprüche

1. Keramikformkörper aus einer keramischen Matrix und mindestens einer darin dispergierten Phase aus keramischem Einlagerungsmaterial, gekennzeichnet durch eine dichte, mikrorissfreie keramische Grundmatrix und darin eingelagerte Druckzonen, die aus einer Mischung eines Grundmatrixmaterials mit unstabilisierten, bei Raumtemperatur überwiegend monoklinen $ZrO_2$-Teilchen bestehen.

2. Keramikformkörper nach Anspruch 1, dadurch gekennzeichnet, dass die Grundmatrix und das Grundmatrixmaterial der eingelagerten Druckzonen aus dem gleichen Stoff bzw. der gleichen Stoffzusammensetzung bestehen.

3. Keramikformkörper nach Anspruch 1 oder 2, dadurch gekennzeichnet, dass die Druckzonen kugelförmig sind und einen Durchmesser im Bereich von 5 bis 100 µm aufweisen.

4. Keramikformkörper nach den Ansprüchen 1 bis 3, dadurch gekennzeichnet, dass er als Grundmatrixmaterial $Al_2O_3$, Mullit, Spinell, $Si_3N_4$, $Y_2O_3$ und/oder mit MgO und/oder $Y_2O_3$ teilstabilisiertes $ZrO_2$ enthält.

5. Keramikformkörper nach einem der vorhergehenden Ansprüche, dadurch gekennzeichnet, dass das Grundmatrixmaterial eingelagertes $ZrO_2$ enthält, das bei Raumtemperatur überwiegend in der tetragonalen Gittermodifikation vorliegt und dessen Teilchengrösse weniger als 1 µm beträgt.

6. Keramikformkörper nach Anspruch 5, dadurch gekennzeichnet, dass das Grundmatrixmaterial 1 bis 25 Vol.% $ZrO_2$-Teilchen enthält.

7. Keramikformkörper nach den Ansprüchen 5 oder 6, dadurch gekennzeichnet, dass die in dem Grundmatrixmaterial dispergierten $ZrO_2$-Teilchen mit bis zu 2 Mol-% $Y_2O_3$ teilstabilisiert sind.

8. Keramikformkörper nach einem der vorhergehenden Ansprüche, dadurch gekennzeichnet, dass der Anteil der Druckzonen in der Grundmatrix 5 bis 30 Vol.% beträgt.

9. Keramikformkörper nach einem der vorhergehenden Ansprüche, dadurch gekennzeichnet, dass die Druckzonen 5 bis 50 Vol.% unstabilisierte $ZrO_2$-Teilchen enthalten.

10. Keramikformkörper nach einem der vorhergehenden Ansprüche, dadurch gekennzeichnet, dass die $ZrO_2$-Teilchen der Druckzonen mit 0,5 bis 1,5 Mol.-% $Y_2O_3$ und die $ZrO_2$-Teilchen der Grundmatrix mit 2 bis 4 Mol-% $Y_2O_3$ stabilisiert sind.

11. Keramikformkörper nach einem der vorhergehenden Ansprüche, dadurch gekennzeichnet, dass er eine durch spannungsinduzierte Umwandlung der tetragonalen $ZrO_2$-Teilchen erzeugte Oberflächendruckspannung aufweist.

12. Verfahren zur Herstellung des Keramikformkörpers nach den Ansprüchen 1 bis 11, dadurch gekennzeichnet, dass man das Grundmatrixmaterial mit Agglomeraten des Druckzonenmaterials trocken vermischt, die Mischung nach an sich bekannten pulvermetallurgischen Verfahren zu Formkörpern verpresst und diese entweder drucklos sintert oder sintert und heissisostatisch nachpresst.

13. Verfahren nach Anspruch 12, dadurch gekennzeichnet, dass man ein agglomeriertes Grundmatrixmaterial einsetzt, das aus den entsprechenden pulverförmigen Bestandteilen durch Sprühtrocknen, Gefriertrocknen oder Behandeln im Taumelmischer gebildet worden ist.

14. Verfahren nach den Ansprüchen 12 oder 13, dadurch gekennzeichnet, dass man durch Schleifen der Oberfläche des gesinterten Keramikformkörpers Oberflächendruckspannungen erzeugt und damit die Festigkeit des Formkörpers steigert.

15. Verwendung des Keramikformkörpers gemäss den Ansprüchen 1 bis 11 als Konstruktionselement im heissen Bereich von Wärmekraftmaschinen.

**Claims**

1. Ceramic formed body made of a ceramic matrix and at least one phase of ceramic incorporation material dispersed therein, characterised by a dense, microcrackfree ceramic base matrix and pressure zones incorporated therein which consist of a mixture of the base matrix material with unstabilised zirconium dioxide particles which are preponderantly monoclinic at room temperature.

2. Ceramic formed body according to claim 1, characterised in that the base matrix and the base matrix material of the incorporated pressure zones consist of the same material or of the same material composition.

3. Ceramic formed body according to claim 1 or 2, characterised in that the pressure zones are spheroidal and have a diameter in the range of 10 to 100 µm.

4. Ceramic formed body according to claims 1 to 3, characterised in that, as base matrix material, it contains $Al_2O_3$, mullite, spinel, $Si_3N_4$, $Y_2O_3$ and/or $ZrO_2$ partly stabilised with MgO and/or $Y_2O_3$.

5. Ceramic formed body according to one of the preceding claims, characterised in that the base matrix material contains incorporated $ZrO_2$ which, at room temperature, is preponderantly present in the tetragonal lattice modification and the particle size of which is less than 1 µm.

6. Ceramic formed body according to claim 5, characterised in that the base matrix material contains 1 to 25 vol% of $ZrO_2$ particles.

7. Ceramic formed body according to claim 5 or 6, characterised in that the $ZrO_2$ particles dispersed in the base matrix material are partly stabilised with up to 2 mole % $Y_2O_3$.

8. Ceramic formed body according to one of the preceding claims, characterised in that the proportion of the pressure zones in the base matrix is 5 to 30 vol.%.

9. Ceramic formed body according to one of the preceding claims, characterised in that the pressure zones contain 5 to 50 vol.% of unstabilised $ZrO_2$ particles.

10. Ceramic formed body according to one of the preceding claims, characterised in that the $ZrO_2$ particles of the pressure zones are stabilised with 0.5 to 1.5 mole % $Y_2O_3$ and the $ZrO_2$ particles of the base matrix are stabilised with 2 to 4 mole % of $Y_2O_3$.

11. Ceramic formed body according to one of the preceding claims, characterised in that it has a surface compressive stress produced by stress- induced transformation of the tetragonal $ZrO_2$ particles.

12. Process for the production of the ceramic formed body according to claims 1 to 11, characterised in that one dry mixes the base matrix material with agglomerates of the pressure zone material, presses the mixture according to known powder metallurgical processes to give formed bodies and either sinters these without pressure or sinters and subsequently hot presses isostatically.

13. Process according to claim 12, characterised in that one uses an agglomerated base matrix material which has been formed from the corresponding powdered components by spray drying, freeze drying or treatment in a tumbler mixer.

14. Process according to claims 12 or 13, characterised in that one produces surface compressive stresses by grinding the surface of the sintered ceramic formed body and thus increases the strength of the formed body.

15. Use of the ceramic formed bodies according to claims 1 to 11 as constructional elements in the hot region of thermal power machines.

## Revendications

1. Corps moulé en céramiqe constitué par une matrice céramique et par au moins une phase en matériau céramique d'insertion dispersée dans la matrice céramique, caractérisé par une matrice céramique dense de base, exempte de microfissures et par des zones comprimées ou de pression, insérées dans cette matrice de base, lesquelles zones consistent en un mélange d'un matériau de matrice de base avec des particules de $ZrO_2$ non stabilisées, surtout monoclinales à la température ambiante.

2. Corps moulé en céramique selon la revendication 1, caractérisé en ce que la matrice de base et le matériau de matrice de base des zones comprimées insérées sont constitués par la même matière ou par la même composition de matière.

3. Corps moulé en céramique selon la revendication 1 ou 2, caractérisé en ce que les zones comprimées sont sphériques et présentent un diamètre situé dans le domaine de 5 à 100 µm.

4. Corps moulé en céramique selon les revendications 1 à 3, caractérisé en ce qu'il contient en tant que matériau de matrice de base de l'$Al_2O_3$, de la mullite, du spinelle, du $Si_3N_4$, de l'$Y_2O_3$ et/ou du $ZrO_2$ partiellement stabilisé avec du MgO et/ou de l'$Y_2O_3$.

5. Corps moulé en céramique selon l'une des revendications précédentes, caractérisé en ce que le matériau de matrice de base contient du $ZrO_2$ inséré, lequel à la température ambiante se présente de façon prédominante sous la modification tétragonale du réseau et dont la granulométrie des particules est inférieure à 1 µm.

6. Corps moulé en céramique selon la revendication 5, caractérisé en ce que le matériau de matrice de base contient de 1 à 25% en volume de particules de $ZrO_2$.

7. Corps moulé en céramique selon les revendications 5 ou 6, caractérisé en ce que les particules de $ZrO_2$ dispersées dans le matériau de matrice de base sont partiellement stabilisées avec jusqu'à 2 moles % d'$Y_2O_3$.

8. Corps moulé en céramique selon l'une des revendications précédentes, caractérisé en ce que la proportion de zones comprimées dans la matrice de base est de 5 à 30% en volume.

9. Corps moulé en céramique selon l'une des revendications précédentes, caractérisé en ce que les zones comprimées contiennent de 5 à 50% en volume de particules de $ZrO_2$ non stabilisées.

10. Corps moulé en céramique selon l'une des revendications précédentes, caractérisé en ce que les particules de $ZrO_2$ des zones comprimées sont stabilisées par 0,5 à 1,5 moles % d'$Y_2O_3$ et les particules de $ZrO_2$ de la matrice de base sont stabilisées avec 2 à 4 moles % d'$Y_2O_3$.

11. Corps moulé en céramique selon l'une des revendications précédentes, caractérisé en ce qu'il présente une tension de compression superficielle produite par la transformation induite par tension des particules de $ZrO_2$ tétragonales.

12. Procédé pour la fabrication du corps moulé en céramique selon les revendications 1 à 11, caractérisé en ce que l'on mélange à sec le matériau de la matrice de base avec des agglomérats du matériau des zones comprimées, que l'on comprime le mélange en corps moulés selon des procédés en eux-mêmes connus dans la métallurgie des poudres et que l'on fritte ceux-ci soit sans pression ou que l'on les fritte et les comprime a posteriori isostatiquement à chaud.

13. Procédé selon la revendication 12, caractérisé en ce que l'on met en œuvre un matériau de matrice de base aggloméré, qui a été formé à partir des composants pulvérulents correspondants par séchage par pulvérisation, lyophilisation ou traitement dans un mélangeur excentrique.

14. Procédé selon les revendications 12 ou 13, caractérisé en ce que l'on produit des tensions de compression de surface par meulage de la surface du corps moulé en céramique fritté et que l'on augmente ainsi la résistance du corps moulé.

15. Utilisation du corps moulé en céramique selon les revendications 1 à 11, en tant qu'élément de construction dans le domaine des hautes températures des moteurs thermiques.